# EUROPÄISCHE PATENTSCHRIFT

(11) **EP 0 574 803 B1**
(45) Veröffentlichungstag und Bekanntmachung des Hinweises auf die Patenterteilung: **02.09.1998**
(21) Anmeldenummer: 93109177.1
(22) Anmeldetag: 08.06.1993
(51) Int. Cl.: C09J 157/00

(54) **Verwendung von wässrigen Dispersionen als Heisssiegelkleber**
Use of aqueous dispersions as hot-melt adhesive
Utilisation de dispersions aqueuses comme colle thermo-fusible

(30) Priorität: 16.06.1992 DE 4219651
(43) Veröffentlichungstag der Anmeldung: 22.12.1993
(73) Patentinhaber: BASF Aktiengesellschaft, 67063 Ludwigshafen (DE)
(72) Erfinder: Bauer, Gerhard, Dr., D-6940 Weinheim (DE); Schumacher, Karl-Heinz, Dr., D-6730 Neustadt (DE); Fricke, Hans-Joachim, D-6716 Dirmstein (DE); Wistuba, Eckehardt, Dr., D-6702 Bad Duerkheim (DE); Neumann, Hans J., D-6706 Wachenheim (DE)

(56) Entgegenhaltungen:
- EP-A- 0 417 570
- DE-A- 3 921 256
- CHEMICAL ABSTRACTS, vol. 99, no. 6, 8.August 1983 Columbus, Ohio, US; abstract no. 39546,
- DATABASE WPI Section Ch, Week 8204 Derwent Publications Ltd., London, GB; Class A81, AN 82-06823E & JP-A-56 161 484 ( SANYO CHEM IND LTD) , 11.Dezember 1981

## Beschreibung

Die Erfindung betrifft die Verwendung einer wäßrigen Dispersion, enthaltend
5 bis 80 Gew.-% eines Copolymerisats A) mit einer Glasübergangstemperatur von 50 bis 150°C und
95 bis 20 Gew.-% eines Copolymerisats B) mit einer Glasübergangstemperatur von -50 bis +50°C,
wobei sich die Glasübergangstemperaturen der beiden Copolymerisate um mindestens 5°C unterscheiden, mindestens eines der beiden Copolymerisate einen Gehalt an einer ethylenisch ungesättigten C₃-C₅-Mono- oder Dicarbonsäure bzw. deren Anhydrid von 3 bis 70 Gew.-%, bezogen auf das jeweilige Copolymerisat, aufweist und sich die Gewichtsangaben der Copolymerisate A) und B) auf die Summe von A) und B) beziehen,
für siegelbare Beschichtungen.

Bei Copolymerisaten für siegelbare Beschichtungen, auch Heißsiegelkleber oder -lacke genannt, handelt es sich um Polymerisate, welche sich zum Verkleben z.B. von Kartonagen und Kunststoff-Folien bei hoher Temperatur eignen. Heißsiegelkleber sind z.B. zur Herstellung von Verpackungen geeignet. Dazu wird der Heißsiegelkleber auf ein flächiges Substrat, z.B. eine Kartonage, aufgetragen und das zu verpakkende Gut später durch Verkleben (Heißsiegeln) der Kartonage bei hohen Temperaturen mit einer entsprechend der Form des Verpackungsgegenstandes tiefgezogenen Kunststoff-Folie umschlossen.

Da die Beschichtung des Substrats und das Verkleben in verschiedenen Arbeitsgängen durchgeführt werden, ergeben sich für Heißsiegelkleber teils gegensätzliche Anforderungen.

Die beschichteten Substrate bzw. Kartonagen müssen gestapelt werden können, ohne daß sie zusammenhaften (Blockfestigkeit).

Die Heißsiegelkleber sollten daher bei üblichen Lagertemperaturen (bis zu 40°C) nicht klebrig sein.

Beim Heißsiegeln ist es jedoch erwünscht, daß nicht zu hohe Temperaturen erforderlich sind und die erhaltenen Verklebungen eine hohe Festigkeit zeigen (gute Heißsiegelbarkeit).

Die Anforderungen an eine gute Blockfestigkeit und gute Heißsiegelbarkeit werden von bisher bekannten Heißsiegelklebern, wie sie z.B. aus der DE-A-3 930 743 und DE-A-3 921 256 bekannt sind, nur unzureichend erfüllt.

In der DE-A-3 921 256 werden wäßrige Dispersionen, die ein Gemisch zweier Copolymerisate enthalten, beschrieben. Die Herstellung dieser Copolymerisate erfolgt durch Lösungspolymerisation und anschließende Dispergierung in Wasser.

Aufgabe der vorliegenden Erfindung waren siegelbare Beschichtungen, welche sowohl eine gute Blockfestigkeit als auch Heißsiegelbarkeit aufweisen.

Demgemäß wurde die oben beschriebene Verwendung gefunden.

Die wäßrige Dispersion zur Verwendung als siegelbare Beschichtung enthält, bezogen auf die Summe der Copolymerisate A) und B) 5 bis 80 Gew.-%, bevorzugt 10 bis 70 Gew.-%, besonders bevorzugt 15 bis 50 Gew.-% des Copolymerisats A) und 95 bis 20 Gew.-%, bevorzugt 90 bis 30 Gew.-% und besonders bevorzugt 85 bis 50 Gew.-% des Copolymerisats B).

Die Glasübergangstemperatur von A) beträgt 50 bis 150, vorzugsweise 70 bis 120°C, diejenige von B) beträgt -50 bis +50°C, vorzugsweise -25 bis +25°C.

Die Glasübergangstemperatur des Copolymerisats läßt sich nach üblichen Methoden wie Differentialthermoanalyse oder Differential Scanning Calorimetrie (s. z.B. ASTM 3418/82, sog. "midpoint temperature") bestimmen.

Die Copolymerisate enthalten vorzugsweise Hauptmonomere a), bei denen es sich um Ester der Acryl- oder Methacrylsäure von 1 bis 20 C-Atomen, vorzugsweise 1 bis 8 C-Atomen enthaltenden Alkylalkoholen oder C₈- bis C₁₂ vinylaromatische Verbindungen handelt.

Genannt seien insbesondere Methyl(meth)acrylat, Ethyl(meth)acrylat, Propyl(meth)acrylat, n-Butyl(meth)acrylat oder 2-Ethylhexyl(meth)acrylat, Vinylaromaten wie Vinyltoluol, o- und p-Styrol und vorzugsweise Styrol.

Als weitere Hauptmonomere a) kommen z.B. Vinylester von Carbonsäuren mit 1 bis 20 C-Atomen wie Vinyllaurat, -stearat, Vinylpropionat und Vinylacetat,
ethylenisch ungesättigte Nitrile wie Acrylnitril und Methacrylnitril in Betracht.

Insbesondere werden Mischungen dieser Hauptmonomeren a) eingesetzt, so daß sich die jeweils gewünschte Glasübergangstemperatur ergibt.

Neben den Hauptmonomeren a) können noch sog. Hilfsmonomere b) eingesetzt werden. Dabei kommen z.B. Vinylhalogenide, bevorzugt Vinylchlorid und Vinylidenchlorid,
nicht aromatische Kohlenwasserstoffe mit 2 bis 8 C-Atomen und mindestens zwei olefinischen Doppelbindungen, z.B. Butadien, Isopren oder Chloropren,

Ester der Acryl- und Methacrylsäure von Alkoholen mit 1 bis 20 C-Atomen, die außer dem Sauerstoffatom in der Alkoholgruppe mindestens ein weiteres Heteroatom enthalten und/oder die einen aliphatischen oder aromatischen Ring enthalten, wie 2-Ethoxyethylacrylat, 2-Butoxyethyl(meth)acrylat, Dimethylaminoethyl(meth)acrylat, Diethylaminoethyl(meth)acrylat, (Meth)acrylsäurearyl-, -alkaryl- oder cycloalkylester, wie Cyclohexyl(meth)acrylat, Phenylethyl(meth)-acrylat, Phenylpropyl(meth)acrylat- oder Acrylsäureester von heterocyclischen Alkoholen wie Furfuryl(meth)acrylat in Betracht.

Weitere Hilfsmonomere b) sind z.B. (Meth)acrylamid, dessen am Stickstoff mit C₁-C₄-Alkyl substituierte Derivate und hydrofunktionelle Comonomere, z.B. (Meth)acrylsäure-C₁-C₁₅-alkylester, welche durch ein oder zwei Hydroxylgruppen substituiert sind. Insbesondere von Bedeutung als hydrofunktionelle Comonomere sind (Meth)acrylsäure-C1-C₈-Hydroxyalkylester, wie n-Hydroxyethyl-, n-Hydroxypropyl- oder n-Hydroxybutyl(meth)acrylat.

Zumindest eines der beiden Copolymerisate hat einen Gehalt von 3 bis 70 Gew.-%, bezogen auf das Copolymerisat an einer ethylenisch ungesättigten C₃- bis C₅ Mono- oder Dicarbonsäure bzw. deren Anhydrid (Monomer c)).

Als Monomere c) zu nennen sind beispielsweise (Meth)acrylsäure, Maleinsäure, Fumarsäure, Maleinsäure-, Fumarsäureanhydrid oder Itaconsäure.

Die Herstellung der Copolymerisate erfolgt durch radikalische Polymerisation. Geeignete Polymerisationsmethoden, wie Substanz-, Lösungs-, Suspensions- oder Emulsionspolymerisation sind dem Fachmann bekannt.

Insbesondere werden die Copolymerisate durch Lösungspolymerisation mit anschließender Dispergierung in Wasser (Sekundärdispersion) oder bevorzugt durch Emulsionspolymerisation hergestellt.

Die Copolymerisate A und B können getrennt hergestellt werden und anschließend in gewünschten Mengen gemischt werden.

Die Monomeren können bei der Emulsionspolymerisation wie üblich in Gegenwart eines wasserlöslichen Initiators und eines Emulgators bei vorzugsweise 30 bis 95°C polymerisiert werden.

Geeignete Initiatoren sind z.B. Natrium-, Kalium- und Ammoniumpersulfat, tert.-Butylhydroperoxide, wasserlösliche Azoverbindungen oder auch Redoxinitiatoren.

Als Emulgatoren dienen z.B. Alkalisalze von längerkettigen Fettsäuren, Alkylsulfate, Alkylsulfonate, alkylierte Arylsulfonate oder alkylierte Biphenylethersulfonate.

Des weiteren kommen als Emulgatoren Umsetzungsprodukte von Alkylenoxiden, insbesondere Ethylen- oder Propylenoxid mit Fettalkoholen. -säuren oder Phenol bzw. Alkylphenolen in Betracht.

Im Falle von wäßrigen Sekundärdispersionen werden die Copolymerisate zunächst durch Lösungspolymerisation in einem organischen Lösungsmittel hergestellt und anschließend unter Zugabe von Salzbildnern, z.B. von Ammoniak zu Carbonsäuregruppen enthaltenden Copolymerisaten, in Wasser ohne Verwendung eines Emulgators oder Dispergierhilfsmittels dispergiert. Das organische Lösungsmittel kann abdestilliert werden. Die Herstellung von wäßrigen Sekundär-dispersionen ist dem Fachmann bekannt und z.B. in der DE-A-37 20 860 beschrieben.

Zur Einstellung des Molekulargewichts können bei der Polymerisation Regler eingesetzt werden. Geeignet sind z.B. -SH enthaltende Verbindungen wie Mercaptoethanol, Mercaptopropanol, Thiophenol, Thioglycerin, Thioglykolsäureethylester, Thioglykolsäuremethylester, tert.-Dodecylmercaptan oder Mercaptoessigsäure.

In besonders bevorzugter Ausführungsform erfolgt die Herstellung der Copolymerisate in der Weise, daß zunächst ein Copolymerisat, welches einen Gehalt an Monomeren c) von 3 bis 70 Gew.-% aufweist, hergestellt wird.

Die Herstellung kann z.B. durch Emulsionspolymerisation in wäßriger Phase oder Lösungspolymerisation mit anschließender Dispergierung in Wasser erfolgen. Die Monomeren des anderen Copolymerisats können dann in Gegenwart des bereits hergestellten Copolymerisats durch Emulsionspolymerisation in wäßriger Phase polymerisiert werden.

Es hat sich als besonders geeignet erwiesen, zunächst Copolymerisat A) herzustellen.

Copolymerisat A) besteht daher bevorzugt aus 10 bis 97 Gew.-%, besonders bevorzugt 30 bis 80 Gew.-% der Monomeren a), 0 bis 50 Gew.-%, besonders bevorzugt 0 bis 20 Gew.-% der Monomeren b) und 3 bis 70 Gew.-%, besonders bevorzugt 20 bis 70 Gew.-% der Monomeren c).

In Gegenwart des Copolymerisats A) werden dann die Monomeren des Copolymerisats B) polymerisiert. Die Monomeren des Copolymerisats B) können in gesamter Menge in eine Vorlage gegeben oder einer Vorlage kontinuierlich zudosiert werden, welche Copolymerisat A) enthält. Weiterhin können z.B. sowohl Copolymerisat A) bzw. Teile des Copolymerisats A) als auch die Monomeren des Copolymerisats B) kontinuierlich in gleichen oder verschiedenen Zeiträumen in eine Vorlage dosiert werden.

Copolymerisat B) besteht bevorzugt aus 20 bis 100 Gew.-%, besonders bevorzugt aus 50 bis 100 Gew.-% der Monomeren a), 0 bis 80 Gew.-%, besonders bevorzugt 0 bis 30 Gew.-% der Monomeren b) und 0 bis 30 Gew.-%, besonders bevorzugt 0 bis 20 Gew.-% der Monomeren c).

Ein Gehalt an Monomeren b) ist in den Copolymerisaten A) und B) im allgemeinen für eine gute Blockfestigkeit und Heißsiegelbarkeit von untergeordneter Bedeutung.

Bei der Polymerisation der Monomeren der Copolymerisate B) können die für Emulsionspolymerisationen üblichen Initiatoren oder auch Regler zugesetzt werden (s.o.). Ein Zusatz eines Emulgators ist im allgemeinen nicht notwendig, da bereits Copolymerisat A) aufgrund des Gehalts an Monomeren c) eine emulgierende Wirkung hat. Sie können jedoch, falls gewünscht, z.B. in Mengen von 0,05 bis 3 Gew.-%, bezogen auf die Summe der Copolymerisate zugesetzt werden.

Das mittlere Molekulargewicht Mₙ der Copolymerisate A) liegt vorzugsweise über 400, insbesondere zwischen 500 und 80000, das der Copolymerisate B) liegt vorzugsweise zwischen 10000 und 1000000.

Die erhaltene wäßrige Dispersion hat vorzugsweise einen Feststoffgehalt von 20 bis 70 Gew.%.

Die wäßrige Dispersion wird für siegelbare Beschichtungen verwendet und kann für diese Verwendung übliche Zusatzstoffe z.B. Netzmittel, Verdicker, Entschäumer oder Filmbildner enthalten.

Die Dispersion kann dazu zunächst auf ein Substrat, z.B. (un)bedrucktes Papier, Kartonagen, Folien aus Polyvinylchlorid, Polyethylenterephthalat, Polystyrol oder Polyolefinen aufgetragen werden. Die Auftragsmenge (bezogen auf Feststoff) beträgt im allgemeinen 1 bis 100 g, bevorzugt 3 bis 40 g pro m² beschichtete Fläche.

Das beschichtete Substrat wird dann mit einem weiteren unbeschichteten Substrat verpreßt (heißsiegeln bzw. siegeln). Als unbeschichtete Substrate kommen z.B. ebenfalls die obengenannten in Betracht. Durch die Heißsiegelung können Gegenstände verpackt werden, indem z.B. eine Kartonage punkt-oder zonenförmig bei den Heißsiegelkleber beschichtet und anschließend z.B. mit einer tiefgezogenen Kunststoff-Folie verpreßt wird, so daß ein zu verpackendes Gut umschlossen wird.

Bei der Heißsiegelung werden die Substrate durch Siegelbakken zusammengepreßt. Die Temperatur an den Siegelbacken kann dabei 80 bis 250°C, vorzugsweise 100-200°C betragen. Die Anpreßdrucke liegen im allgemeinen zwischen 0,1 bar und 10 bar, insbesondere zwischen 2 - 6 bar, bei einer Anpreßzeit (Kontaktzeit) von mindestens 1 Sekunde, im allgemeinen zwischen 2 und 6 Sekunden.

### Beispiele

### Copolymerisate A:

Bei den beispielhaften Copolymerisaten A handelt es sich um wasserlösliche Copolymerisate, welche entsprechend dem Verfahren der DE-A-3 225 876 in Substanzpolymerisation hergestellt wurden.

Dazu wurden 60 Gew.-teile Styrol und 40 Gew.-teile Acrylsäure in einen 1 l fassenden Druckkessel mit nachgeschaltetem Druckrohr doppelten Rauminhalts mit Druckregler kontinuierlich zudosiert. Das System wurde auf 310°C erhitzt. Der Druck wurde im Bereich zwischen 5 und 50 bar gehalten und einmal innerhalb einer Minute durch eine periodische Druckregelung in diesem Bereich variiert. Die Verweilzeit betrug 11 Min.; die Copolymerschmelze wurde mengenmäßig in dem Maße ausgefahren, wie frische Monomerenmischung zugefahren wurde. Das Copolymerisat wies ein mittleres Molekulargewicht Mₙ von 650 und eine Molekulargewichtsuneinheitlichkeit U = M_{w}/Mₙ -1 von 1,5 auf. Die Herstellung des weiteren Copolymerisats A erfolgte entsprechend.

### Herstellung der Copolymerisate B in Gegenwart der Copolymerisate A:

In einem 3 l-Vierhalskolben, der mit Rückflußkühler, 2 Zulaufgefäßen, Thermometer, Pilot-Rührwerk sowie Gaseinlaß und -auslaß ausgestattet war, wurden die in der Tabelle 1 angegebene Menge einer wäßrigen Lösung der Copolymeren A vorgelegt und nach Spülung des Reaktionsgefäßes mit Stickstoff auf 85°C erhitzt. Man gab 54 g einer 1,5 %igen wäßrigen Natriumperoxidsulfatlösung hinzu und ließ dann bei 85°C unter Rühren während 2 h 1000 g der Monomeren des Copolymerisats B zulaufen. Gleichzeitig wurden in einem separaten Zulauf 126 g einer 1,5 %igen Natriumperoxidsulfatlösung in 2,5 h zugetropft. Nach Beendigung der beiden Zuläufe ließ man noch 1 h bei 850C reagieren und kühlte anschließend auf Raumtemperatur.

Die nach dieser Herstellvorschrift erhaltenen Polymerdispersionen sind koagulatfrei. Die Zusammensetzung ist in Tab. 1 angegeben.

### Vergleichsbeispiele

Die Vergleichsbeispiele 1 und 2 (V1 und V2) entsprechen Beispielen 1 und 2 aus der DE-A-3 921 256.

In einem Reaktionsgefäß wurde Mischung 1 zusammen mit 260 g Isobutanol vorgelegt und auf 105°C erwärmt. Dann wurde Mischung 2 zugegeben und 2,5 Stunden bei Rückflußtemperatur polymerisiert. Anschließend wurde Mischung 3 im Verlauf von 3 Stunden bei ca. 105°C zudosiert. Danach wurde noch 4 Stunden bei 105°C polymerisiert und dabei mit 200 g Isobutanol verdünnt. Nach Abkühlen auf 60°C wurden zunächst 35,4 g 25 gew.-%ige wäßrige Ammoniaklösung und dann 850 g Wasser eingerührt. Unter Vakuum wurde so lange ein Isobutanol-Wasser-Gemisch abdestilliert, bis praktisch kein Isobutanol mehr überging. Während der Destillation wurde eine der abdestillierten Flüssigkeitsmenge entsprechende Menge Wasser zugegeben.

| | V1 | V2 |
|---|---|---|
| Mischung 1: | | |
| Methylmethacrylat (g) | 160 | 145 |
| n-Butylacrylat (g) | 100 | 110 |
| Acrylsäure (g) | 20 | 25 |
| | | |

| Mischung 2: | | |
|---|---|---|
| tert.-Butylbenzoat (g) | 1,5 | 1,5 |
| tert.-Butylperoctoat (g) | 1,5 | 1,5 |
| Isobutanol (g) | 30 | 30 |
| | | |

| Mischung 3: | | |
|---|---|---|
| Methylmethacrylat (g) | 370 | 380 |
| n-Butylacrylat (g) | 350 | 340 |
| tert.-Butylperbenzoat (g) | 7,5 | 6,7 |
| tert.-Butylperoctoat (g) | 4,5 | 6,0 |
| Isobutanol (g) | 150 | 140 |

Die Zusammensetzung ist in Tab. 1 angegeben.

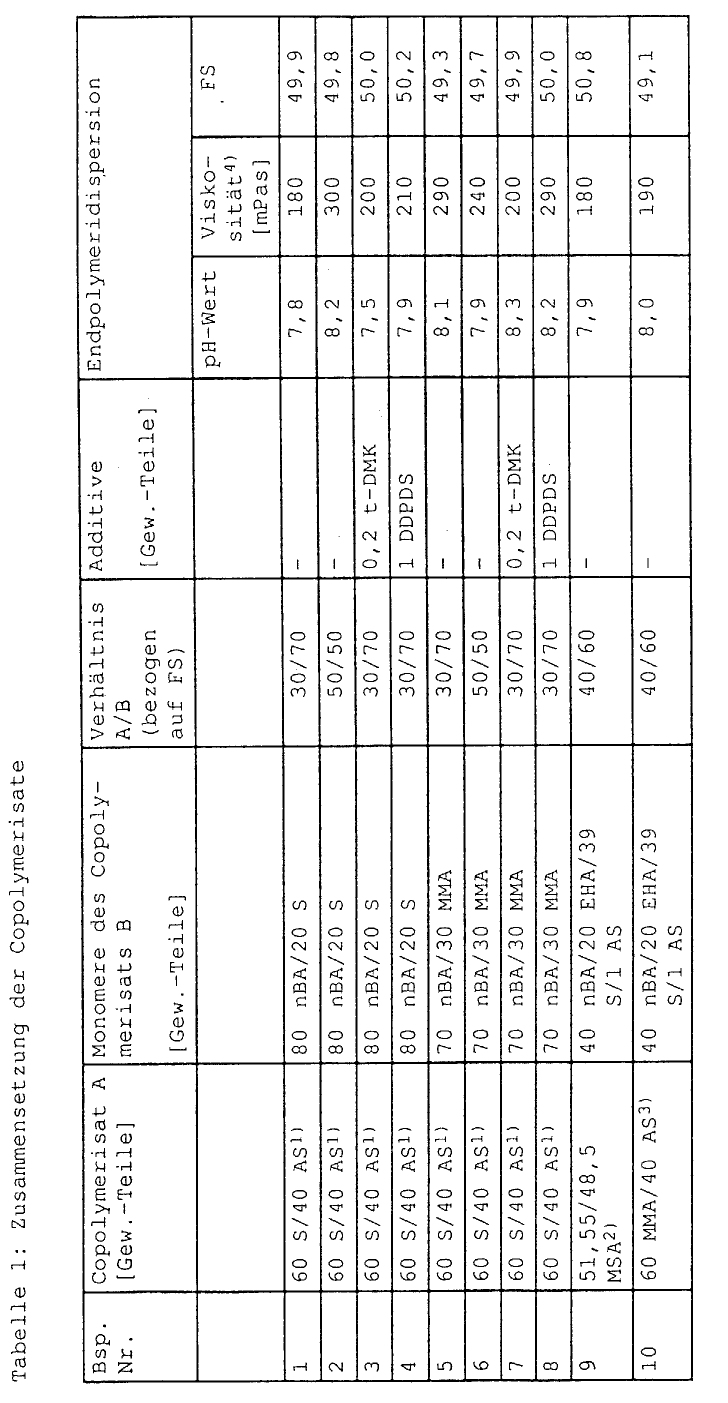

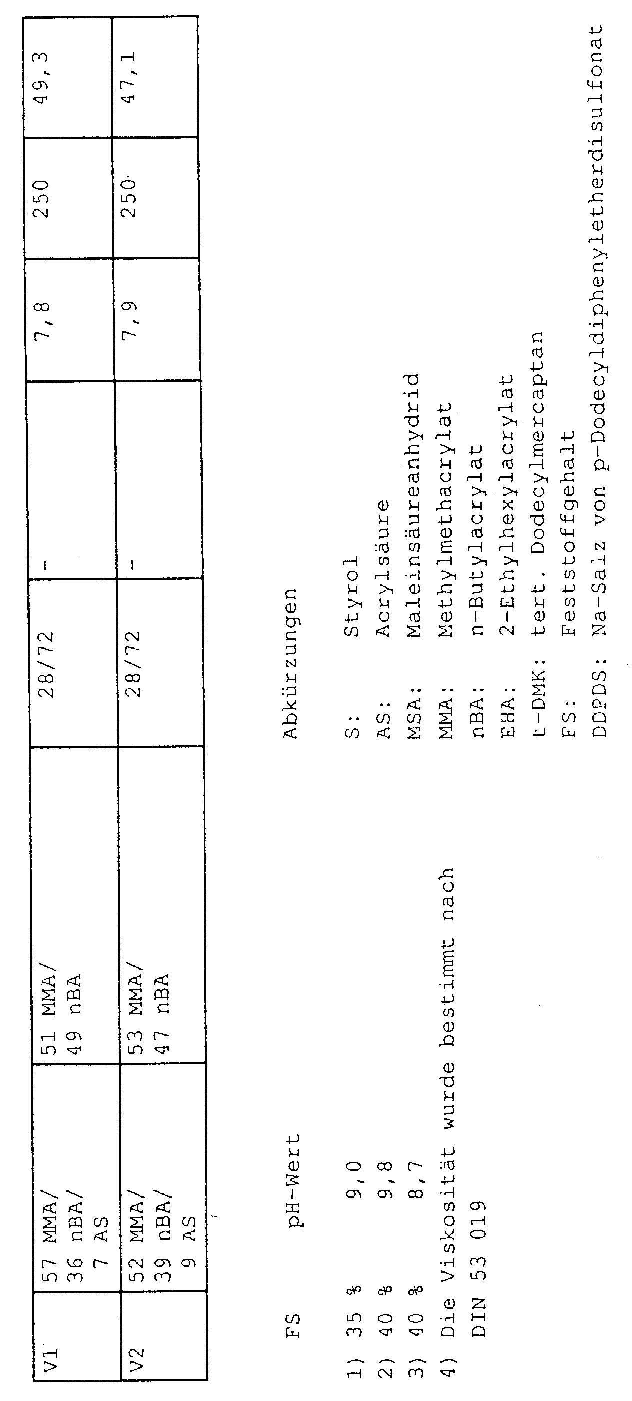

### Glasübergangstemperaturen der Copolymerisate

Die Glasübergangstemperaturen wurden mit Hilfe der Differential Scanning Calorimetrie nach ASTM 3418/82 bestimmt. Näherungsweise kann sie auch nach der Fox-Gleichung aus den Glasübergangstemperaturen der Monomeren berechnet werden (T.G. Fox, Bull. Am. Phys. Soc. Ser. II 1, 123 1956).

**Tabelle 2:**

| Glasübergangstemperaturen in °C | | |
|---|---|---|
| Beispiel | Copolymerisat A | Copolymerisat B |
| | | |
| 1 | 125 | -26 |
| 2 | 125 | -26 |
| 3 | 125 | -26 |
| 4 | 125 | -26 |
| 5 | 125 | -14 |
| 6 | 125 | -14 |
| 7 | 125 | -14 |
| 8 | 125 | -14 |
| 9 | 100 | -8 |
| 10 | 126 | -8 |
| V1 | 35 | 12 |
| V2 | 30 | 16 |

### Anwendungstechnische Prüfung

Die Dispersionen wurden mit einem Rakel (2 mm Zahnung) auf Karton (Chromoduplex-2-Karton) in einer Menge von 7 g Feststoff pro m² aufgetragen und anschließend 3 Minuten bei 50°C getrocknet.

### Bestimmung der Blockfestigkeit

Es wurden je Klebstoff und Gewicht 3 runde Prüfkörper (d=38 mm) ausgestanzt und so aufeinander gelegt, daß von jedem Karton Beschichtung gegen Beschichtung und Beschichtung gegen Rückseite zu liegen kommen. Die so übereinander geschichteten Prüfkörper wurden 15 Stunden bei 40°C mit 1500 g/cm² belastet. Nach dem Abkühlen (unter Belastung) erfolgte die Beurteilung in Noten von 1-5.
- Note 1 =: "Auseinanderspringen" oder geräuschlose Trennung der Proben
- Note 2 =: Knistergeräusche beim Trennen
- Note 3 =: Punktförmige Verklebung der Film- oder Kartonoberfläche
- Note 4 =: Flächenartige Verklebung der Film- oder Kartonoberfläche
- Note 5 =: Vollflächige Verklebung

### Bestimmung der Heißsiegelbarkeit

Die Prüfung erfolgte 24 Stunden nach der Probenherstellung. In einem Heissiegelgerät in dem nur der obere Siegelbacken beheizt ist, wurde eine PVC-Folie gegen die beschichtete Seite des Kartons gesiegelt. Der Karton kam hierbei gegen die beheizte Siegelbacke zu liegen.

Gesiegelt wurde 4 Sekunden bei einem Druck von 4 bar beginnend bei 130°C in Abstufungen von 10°C bis zur vollständigen Versiegelung. Die Temperatur, bei der die Folie fest versiegelt war, war die niedrigst mögliche Siegeltemperatur.

| Blockstabilität [Noten] | | | niedrigst mögliche Siegeltemperatur [°C] | | |
|---|---|---|---|---|---|
| Prüfungs. | Schicht/Schicht | Schicht/Rücken | PVC | PETP | PS |
| B 1 | 3 | 2 | 150 | 170 | 180 |
| B 2 | 2 | 1 | 160 | 180 | 190 |
| B 3 | 3 | 2 | 150 | 170 | 180 |
| B 4 | 3 | 2 | 150 | 170 | 180 |
| B 5 | 3 | 2 | 150 | 170 | 180 |
| B 6 | 2 | 1 | 160 | 180 | 190 |
| B 7 | 3 | 2 | 150 | 170 | 180 |
| B 8 | 3 | 2 | 150 | 170 | 180 |
| B 9 | 2 | 1 | 170 | 190 | 200 |
| B 10 | 2 | 1 | 160 | 180 | 190 |
| | | | | | |
| V 1 | 5 | 3 | 180 | 210 | 220 |
| V 2 | 4-5 | 3 | 190 | 210 | 220 |

Die erfindungsgemäßen Beispiele belegen eine Ausgewogenheit von Blockstabilität und niedrigst möglicher Siegeltemperatur.

## Patentansprüche

1. Verwendung einer wäßrigen Dispersion, enthaltend
5 bis 80 Gew.-% eines Copolymerisats A) mit einer Glasübergangstemperatur von 50 bis 150°C und
95 bis 20 Gew.-% eines Copolymerisats B) mit einer Glasübergangstemperatur von -50 bis +50°C,
wobei sich die Glasübergangstemperaturen der beiden Copolymerisate um mindestens 5°C unterscheiden, mindestens eines der beiden Copolymerisate einen Gehalt an einer ethylenisch ungesättigten C₃-C₅-Mono- oder Dicarbonsäure bzw. deren Anhydrid von 3 bis 70 Gew.-%, bezogen auf das jeweilige Copolymerisat, aufweist und sich die Gewichtsangaben der Copolymerisate A) und B) auf die Summe von A) und B) beziehen,
für siegelbare Beschichtungen.

2. Verwendung nach Anspruch 1, wobei die Herstellung der wäßrigen Dispersion durch Emulsionspolymerisation der Monomeren eines der Copolymerisate A) oder B) in wäßriger Phase in Gegenwart des anderen Copolymerisats A) bzw. B), welches einen Gehalt an einer ethylenisch ungesättigten C₃-C₅ Mono- oder Dicarbonsäure, bzw. deren Anhydrid, von 3 bis 70 Gew.-% aufweist, erfolgt.

3. Verwendung nach Anspruch 2, wobei die Monomeren des Copolymerisats B) in wäßriger Emulsion in Gegenwart des Copolymerisats A), welches einen Gehalt an einer ethylenisch ungesättigten C₃-C₅-Mono- oder Dicarbonsäure bzw. deren Anhydrid von 3 bis 70 Gew.% aufweist, polymerisiert werden.

4. Verfahren zum Heißsiegeln von Substraten, dadurch gekennzeichnet, daß ein Substrat mit einer wäßrigen Dispersion gemäß einem der Ansprüche 1 bis 3 beschichtet und das beschichtete Substrat mit einem zweiten Substrat bei Temperaturen zwischen 80 und 250°C verpreßt wird.

5. Verbund zweier Substrate erhältlich nach einem Verfahren gemäß Anspruch 4.

## Claims

1. Use of an aqueous dispersion containing from 5 to 80% by weight of a copolymer A) having a glass transition temperature of from 50 to 150°C and from 95 to 20% by weight of a copolymer B) having a glass transition temperature of from -50 to +50°C,
the glass transition temperatures of the two copolymers differing by at least 5°C, at least one of the two copolymers containing from 3 to 70% by weight, based on the particular copolymer, of an ethylenically unsaturated C₃-C₅-mono- or dicarboxylic acid or of the anhydride thereof and the stated weights of the copolymers A) and B) being based on the sum of A) and B),
for sealable coatings.

2. Use as claimed in claim 1, wherein the preparation of the aqueous dispersion is carried out by emulsion polymerization of the monomers of one of the copolymers A) or B) in the aqueous phase in the presence of the other copolymer A) or B) which contains from 3 to 70% by weight of an ethylenically unsaturated C₃-C₅-mono-or dicarboxylic acid or of the anhydride thereof.

3. Use as claimed in claim 2, wherein the monomers of copolymer B) are polymerized in aqueous emulsion in the presence of copolymer A) which contains from 3 to 70% by weight of an ethylenically unsaturated C₃-C₅-mono- or dicarboxylic acid or of the anhydride thereof.

4. A process for the heat-sealing of substrates, wherein a substrate is coated with an aqueous dispersion as claimed in any of claims 1 to 3, and the coated substrate is pressed against a second substrate at from 80 to 250°C.

5. A laminate of two substrates obtainable by a process as claimed in claim 4.

## Revendications

1. Utilisation pour des revêtements scellables d'une dispersion aqueuse contenant
5 à 80% en poids d'un copolymère A) ayant une température de transition vitreuse de 50 à 150°C et
95 à 20% en poids d'un copolymère b) ayant une température de transition vitreuse de -50 à +50°C,
où les températures de transition vitreuse des deux copolymères diffèrent d'au moins 5°C, l'un au moins des deux copolymères présentant une teneur en un acide mono- ou dicarboxylique en C₃-C₅ à insaturation éthylénique ou en son anhydride, de 3 à 70% en poids, par rapport au copolymère respectif, et les proportions en poids des copolymères A) et B) se rapportant à la somme de A) et de B).

2. Utilisation selon la revendication 1, où la préparation de la dispersion aqueuse est effectuée par polymérisation en émulsion des monomères d'un des copolymères A) ou B) en phase aqueuse en présence de l'autre copolymère A) ou B), lequel présente une teneur en un acide mono- ou dicarboxylique en C₃-C₅ à insaturation éthylénique ou en son anhydride, de 3 à 70% en poids.

3. Utilisation selon la revendication 2, où les monomères du copolymères B) sont polymérisés en émulsion aqueuse en présence du copolymère A), lequel présente une teneur en un acide mono- ou dicarboxylique en C₃-C₅ à insaturation éthylénique ou en son anhydride, de 3 à 70% en poids.

4. Procédé pour le scellage à chaud de substrats, caractérisé en ce que l'on enduit un substrat avec une dispersion aqueuse selon l'une quelconque des revendications 1 à 3 et en ce que le substrat enduit est comprimé avec un deuxième substrat à des températures comprises entre 80 et 250°C.

5. Rassemblement de deux substrats obtenu par un procédé selon la revendication 4.
